# EUROPÄISCHE PATENTSCHRIFT

(11) **EP 2 789 501 B1**
(45) Veröffentlichungstag und Bekanntmachung des Hinweises auf die Patenterteilung: **03.04.2019**
(21) Anmeldenummer: 13163337.2
(22) Anmeldetag: 11.04.2013
(51) Int. Cl.: B60P 7/08, B60P 1/28, C08J 5/18, B32B 27/30, B32B 27/40, B32B 27/08

(54) **Nutzfahrzeugboden mit rutschfester Kunststofffolie**
Commercial vehicle floor with slip-resistant plastic film
Plancher de véhicule utilitaire doté d'un film en matière synthétique anti-glisse

(43) Veröffentlichungstag der Anmeldung: 15.10.2014
(73) Patentinhaber: Schmitz Cargobull AG, 48341 Altenberge (DE)
(72) Erfinder: Große Liesner, Georg, 48341 Altenberge (DE); Kiriazis, Dr. Leonidas, 48143 Münster (DE)
(74) Vertreter: Cohausz & Florack

(56) Entgegenhaltungen:
- EP-A1- 1 854 663
- EP-A2- 0 732 354
- DE-U1-202007 007 209
- DE-U1-202009 012 321
- DE-U1-202010 016 756
- FR-A1- 2 732 283
- JP-A- H10 181 417
- US-A1- 2008 084 083

## Beschreibung

Die Erfindung betrifft einen Nutzfahrzeugboden, insbesondere eines Lastkraftwagens, Sattelaufliegers und/oder Anhängers, mit einem Bodenbelag und einer wenigstens abschnittsweise auf dem Bodenbelag vorgesehenen und die Oberseite des Nutzfahrzeugbodens bildenden Kunststoffschicht, wobei die Kunststoffschicht unverlierbar mit dem Bodenbelag verbunden ist. Ferner betrifft die Erfindung ein Verfahren zur Herstellung eines entsprechenden Nutzfahrzeugbodens.

Nutzfahrzeuge, unter denen vorliegend insbesondere Lastkraftwagen, Anhänger, Auflieger und sogenannte Wechselbrücken, verstanden werden, sind in verschiedenen Ausführungen bekannt. Diese Nutzfahrzeuge kommen insbesondere für den Güterfernverkehr auf öffentlichen Straßen zum Einsatz. Unter Wechselbrücken werden dabei Nutzfahrzeuge ohne eigenes Fahrwerk verstanden, die jedoch von einem Chassis samt Fahrwerk unterfahren und mit diesem verbunden werden können. Das Nutzfahrzeug kann beispielsweise einen Kofferaufbau oder einen Planenaufbau aufweisen. Letztere werden teilweise auch als Pritschenfahrzeuge bezeichnet. Kofferaufbauten weisen feste Wände, meist in Form von mehrschichtigen Paneelen auf, die den Laderaum einschließen. Bei Planenaufbauten wird der Laderaum durch Planen verschlossen, die von einem Gerüst aus Holmen, Rungen und Spriegeln gehalten werden. Aufbauten, deren Seitenplanen verschiebbar vorgesehen sind, werden auch als Schiebeplanenaufbauten oder Curtain-Sider bezeichnet.

Der Laderaum entsprechender Nutzfahrzeuge wird nach unten durch einen Nutzfahrzeugboden begrenzt, auf dem die zu transportierende Last abgestellt werden kann. Der Nutzfahrzeugboden kann eine tragende Struktur aufweisen, die einen Bodenbelag trägt. Der Bodenbelag, der die Tragschicht zum Abstellen und Tragen der Ladung bildet, kann aus einem Holzwerkstoff oder einem Metall gebildet werden.

Damit die Ladung während des Transports nicht verrutschen kann, muss die Ladung während der Fahrt gesichert werden. Der sogenannten Ladungssicherung kommt in jüngerer Zeit immer größere Bedeutung zu. Einerseits werden Beschädigungen an der Ladung oder Beschädigungen am Nutzfahrzeug, die zu längeren Stillstandszeiten oder höherem Reparaturaufwand führen können, immer weniger geduldet. Andererseits wird die Ladungssicherung von Behörden immer stärker kontrolliert.

Der Fahrer muss also stets eine ordnungsgemäße Ladungssicherung sicherstellen, wozu ihm neben Spanngurten eine Reihe von weiteren Ladungssicherungsmitteln zur Verfügung steht. Das ordnungsgemäße Anbringen der Ladungssicherung ist jedoch mit einem nicht unerheblichen Zeitaufwand verbunden, der aufgrund des hohen Zeitdrucks im Speditionsgewerbe einen zusätzlichen Kostenfaktor darstellt. Außerdem kann nicht ausgeschlossen werden, dass die Ladungssicherung bei besonders großem Zeitdruck nicht sorgfältig genug erfolgt, was leicht zu weiteren Kosten für Reparaturen am Nutzfahrzeug oder wegen beschädigter Ladung führen kann.

Um die Ladungssicherung zu erleichtern, sind rutschhemmende Matten entwickelt worden, die sich unter die Ladung legen lassen. Da die aus Gummi gefertigten Matten dem Verrutschen der Ladung entgegenwirken, muss die Ladung nicht so aufwendig gesichert werden, wie dies ohne die Matten zu erfolgen hätte. Allerdings ist das Handling der Matten aufwendig. Es kann leicht vergessen werden, die Matten in ausreichender Menge unter der Ladung zu platzieren, so dass die übliche Ladungssicherung ein Verrutschen der Ladung nicht zuverlässig verhindern kann. Zudem kommt es häufig vor, dass Matten verloren gehen oder bei der Verwendung zerstört werden. Da auch die Anzahl von sonstigen, vom Nutzfahrzeug mitgeführten Ladungssicherungsmitteln begrenzt ist, kann der Fahrer die Ladung dann teilweise nicht mehr in ausreichendem Maße gegen Verrutschen sichern.

Um die bei der Verwendung von rutschfesten Matten auftretenden Nachteile zu verhindern, ist etwa in der DE 20 2009 010 240 U1 vorgeschlagen worden, auf den Bodenbelag des Nutzfahrzeugs eine Schicht aus Kautschuk und/oder Gummigranulat sowie einen Härter aufzuspritzen, aufzustreichen oder aufzugießen. Durch das Vernetzen des Härters nach dem Aufbringen der Schicht auf dem Bodenblag wird eine dauerhafte, rutschhemmende Schicht erhalten. Aufgrund des Abriebs und einer ausreichenden Sicherung der Ladung gegen Verrutschen beträgt die Dicke der Schicht zwischen 10 mm und 30 mm. Nachteilig an dem bekannten Nutzfahrzeugboden ist jedoch, dass das Aufbringen der rutschhemmenden Schicht zu einem erheblichen Anstieg der Herstellungskosten führt. Entsprechende Nutzfahrzeugböden haben sich in der Praxis daher nicht durchgesetzt.

US-A-2008/0084083 offenbart eine rutschhemmende Unterlage aus einer oberen Kunststoffschicht und einer unteren Textilschicht, wobei die Textilschicht mit dem Bodenbelag des Nutzfahrzeugs mit einem Kleber verbunden ist.

EP-A-1854663 beschreibt eine rutschhemmende Unterlage aus einer oberen Antirutsch-Polymerfolie und einer unteren Polymerschaumschicht, wobei der Schaum auf den Bodenbelag des Nutzfahrzeugs geklebt ist.

Der Erfindung liegt somit die Aufgabe zugrunde, einen Nutzfahrzeugboden der eingangs genannten und zuvor näher beschriebenen Art derart auszugestalten und weiterzubilden, dass die Herstellungskosten unter gleichzeitiger Beibehaltung der rutschhemmenden Eigenschaften gesenkt werden können. Diese Aufgabe ist bei einem Nutzfahrzeugboden mit den Merkmalen des Oberbegriffs von Anspruch 1 dadurch gelöst, dass die Kunststoffschicht eine Polyvinylchlorid (PVC) und/oder Polyurethan (PUR) enthaltende, mit der der Oberseite des Nutzfahrzeugbodens gegenüberliegenden Seite direkt auf den Bodenbelag aufgeklebte und/oder auf dem Bodenbelag kaschierte keine geschäumte Kunststoffschicht aufweisende

Kunststofffolie ist. Das Aufbringen einer vorkonfektionierten Kunststofffolie umfassend PVC und/oder PUR kann leicht, schnell und kostengünstig erfolgen. Beispielsweise kann die Kunststofffolie vor der eigentlichen Herstellung des Nutzfahrzeugbodens extrudiert und/oder als Rollenware angeliefert werden. Dann kann der Bodenbelag in kürzester Zeit mit einer rutschhemmenden Schicht versehen werden, indem die Kunststofffolie abgerollt und auf den Bodenbelag aufgebracht, insbesondere aufgeklebt und/oder kaschiert wird. Wenn hierfür ein Klebstoff erforderlich ist, kann dieser bereits zuvor auf die Folie appliziert werden. Dies ist einfacher und schneller, als den Klebstoff auf den Bodenbelag aufzubringen. Der Klebstoff kann zwar grundsätzlich erst unmittelbar vor dem Aufbringen der Kunststofffolie auf diese aufgebracht werden. Weiter bevorzugt ist es jedoch, wenn der Klebstoff vor dem Aufrollen der Kunststofffolie auf diese aufgebracht worden ist. Nach dem Abrollen der Kunststofffolie ist dann nämlich kein weiteres Handling des Klebstoffs mehr erforderlich. Beispielsweise kann der Klebstoff mit der Kunststofffolie coextrudiert, beispielsweise auf die Kunststofffolie aufgebracht und/oder in die Kunststofffolie eingebracht, werden. Bei Verwendung einer thermoplastischen Folie kann die Folie bedarfsweise auch ohne Klebstoff unter Wärmeeinwirkung und anschließendem Abkühlen aufgebracht werden.

Grundsätzlich können erfindungsgemäß die Taktzeiten bei der Herstellung von Nutzfahrzeugen, insbesondere von Nutzfahrzeugböden, erheblich reduziert werden, weil die rutschhemmende Schicht nicht erst umständlich aufgetragen und anschließend ausgehärtet werden muss.

Bedarfsweise kann die Kunststofffolie nur an bestimmten Stellen des Bodenbelags vorgesehen sein, wenn die Eigenschaften der Kunststofffolie nur an diesen Stellen gewünscht sind oder an den anderen Stellen nicht benötigt werden. Da Nutzfahrzeuge meist für unterschiedliche Transporte eingesetzt werden, ist es jedoch bevorzugt, wenn die Kunststofffolie im Wesentlichen vollflächig auf dem Bodenbelag vorgesehen wird. So kann sichergestellt werden, dass die Ladung immer auf der rutschhemmenden Schicht des Nutzfahrzeugbodens steht.

Die Erfindung hat zudem erkannt, dass durch die Verwendung von PVC und/oder PUR für die Kunststofffolie günstige Eigenschaften erreicht werden können. Einerseits können unter Verwendung dieser Materialien recht dünne und bei der Nutzfahrzeugherstellung leicht zu handhabende Kunststofffolien hergestellt werden. Andererseits können durch die Verwendung von Polyvinylchlorid und Polyurethan gute Eigenschaften sowohl hinsichtlich einer guten rutschhemmenden Wirkung als auch hinsichtlich einer geringen Abnutzung erreicht werden. Dies ist bei den aus dem Stand der Technik bekannten Gummi- und/oder Kautschuk-Schichten nicht der Fall.

Bei einer ersten Ausgestaltung des Nutzfahrzeugbodens weist die Kunststofffolie neben Polyvinylchlorid und/oder Polyurethan auch Anteile von Acrylat, Polystyrol, Acrylester-Styrol-Acrylnitril, Gummi und/oder Kautschuk auf. Diese Materialien erlauben die gezielte Einstellung der gewünschten Folieneigenschaften. Dabei stehen insbesondere eine gute Haftung der Kunststofffolie auf dem Bodenbelag, ein hoher Reibbeiwert der Kunststofffolie und eine hohe Abriebfestigkeit im Vordergrund. Es hat sich gezeigt, dass mit den zuvor genannten Materialien gute Kompromisse hinsichtlich der zuvor genannten Eigenschaften der Kunststofffolie erzielt werden können. Dabei ist es jedoch besonders bevorzugt, wenn die Hauptkomponente der Kunststofffolie durch PVC und/oder PUR gebildet wird und die zuvor genannten Materialien in Form von Zusatzstoffen, Zuschlagstoffen und/oder Additiven vorhanden sind.

Besonders bevorzugt ist es grundsätzlich, wenn die Kunststofffolie eine glatte Oberseite aufweist. Dies bedeutet natürlich nicht, dass die Oberfläche keinerlei Rauhigkeit aufweist. Es bedeutet vielmehr, dass von der Oberfläche keine Partikel, etwa Gummipartikel, nach oben vorstehen und dass in die Oberfläche keine Struktur eingebracht, insbesondere eingeprägt wird. Aufgrund der glatten Oberseite kann eine große Kontaktfläche zwischen der Kunststofffolie und der Ladung erreicht werden. Je größer die Aufstandfläche der Ladung ist, desto weniger neigt diese zum Verrutschen. Nicht zuletzt lassen sich glatte Kunststofffolien leichter reinigen, was insbesondere beim Transport von Lebensmitteln oder ähnlichen Gütern Vorzüge bietet. Bisher wurden Nutzfahrzeuge mit glatten Böden bewusst vermieden, etwa um eine erhöhte Unfallgefahr für Personen zu verhindern, die den Nutzfahrzeugboden im feuchten Zustand betreten, oder um durch einen gewissen Formschluss zwischen der rauen Unterseite der Ladung und der rauen Oberfläche des Nutzfahrzeugbodens einem unbeabsichtigten Verrutschen der Ladung entgegenzuwirken. Überraschenderweise hat sich jedoch gezeigt, dass durch die Verwendung der beschriebenen Kunststofffolie mit glatter Oberfläche die Gefahr verringert werden kann, dass Personen auf dem feuchten Nutzfahrzeugboden ausrutschen und/oder die Ladung versehentlich ins Rutschen gerät.

Eine ausreichende Langlebigkeit bei gleichzeitig leichter Verarbeitbarkeit der Kunststofffolie kann beispielsweise erhalten werden, wenn die Dicke der Kunststofffolie weniger als etwa 2500 µm beträgt. In diesem Zusammenhang ist auch zu berücksichtigen, dass gerade aufgrund der leichten und schnellen Verarbeitbarkeit der kostengünstigen Kunststofffolie in Kauf genommen werden kann, dass der Bodenbelag von Zeit zu Zeit mit einer neuen Kunststofffolie versehen werden muss, wenn Bereiche der bisherigen Kunststofffolie verschlissen sind. Dabei ist es vorteilhaft, dass die neue Kunststofffolie einfach auf die bisherige Kunststofffolie aufgebracht werden kann.

Für ein ausgewogenes Verhältnis zwischen Langlebigkeit und sparsamem Materialeinsatz kommen insbesondere Kunststofffolien mit einer Dicke zwischen 500 µm und 3000 µm, insbesondere zwischen 1000 µm und 2500 µm, weiter vorzugsweise bis zu 2000 µm in Betracht. Dabei kann anstelle eines jeden angegebenen Intervalls auch jede Intervallgrenze für sich genommen als Obergrenze oder Untergrenze für die Schichtdicke der Kunststofffolie relevant sein. Grundsätzlich ist natürlich ein sparsamer Materialverbrauch erstrebenswert, allerdings darf die Kunststofffolie nicht so dünn sein, dass sie nicht mehr komfortabel auf den Bodenbelag des Nutzfahrzeugbodens aufgebracht werden kann oder dass sie bereits in kürzester Zeit abgenutzt wird.

Da ein höherer Reibbeiwert µ der Kunststofffolie, oder wenigstens der Oberseite der Folie, die Ladungssicherung vereinfachen oder den Einsatz konventioneller Ladungssicherungsmittel gar ganz entbehrlich machen kann, ist es bevorzugt, wenn der Reibbeiwert µ wenigstens 0,4 beträgt. Dann können beispielsweise gleichzeitig sehr hohe Abriebfestigkeiten bereitgestellt werden. Dennoch kann es bevorzugt sein, wenn der Reibbeiwert µ wenigstens 0,6, vorzugsweise wenigstens 0,8, beträgt. Dann muss zwar gegebenenfalls eine verminderte Abriebfestigkeit in Kauf genommen werden. Allerdings kann dies wenigstens teilweise dadurch ausgeglichen werden, dass die Ladung weniger auf dem Nutzfahrzeugboden hin und her rutscht, wodurch die Kunststofffolie auch weniger beansprucht wird. Insbesondere wenn der Reibbeiwert µ wenigstens 1,0, beträgt, kann gegebenenfalls ganz auf eine zusätzliche Ladungssicherung verzichtet werden oder eine geringfügige Ladungssicherung ausreichend sein. Dies führt zu einer erheblichen Zeitersparnis beim Be- und Entladen, die es rechtfertigen kann, aufgrund etwaig geringerer Standzeiten die Kunststofffolie in kürzeren Abständen erneuern zu lassen. Mit zunehmendem Reibbeiwert µ muss jedoch sichergestellt werden, dass die Ladung beim Verladen und/oder Entladen völlig vom Nutzfahrzeugboden abgehoben ist. Die Ladung lässt sich dann nämlich immer schwerer auf dem Nutzfahrzeugboden verschieben.

Alternativ oder zusätzlich kann die Kunststofffolie extrudiert oder, insbesondere im Falle eines mehrschichtigen Aufbaus der Kunststofffolie, coextrudiert sein. Auf diese Weise lässt sich die Kunststofffolie sehr kostengünstig herstellen. Außerdem können entsprechend hergestellte Kunststofffolien leicht verarbeitet und auf den Bodenbelag aufgebracht werden. Nicht zuletzt können auf diese Weise gute Kompromisse zwischen einer guten Abriebfestigkeit und hohen Reibbeiwerten erreicht werden. Im Übrigen ist die Kunststofffolie umgeschäumt ausgebildet, also kommt sie ohne Schichten, insbesondere Kernschichten, aus einem geschäumten Kunststoff aus. Die Ladung kann nämlich solche geschäumten Schichten komprimieren und so tiefer in die Kunststofffolie eindringen, wodurch die Haltbarkeit der Kunststofffolie erheblich reduziert werden kann. Dies gilt insbesondere dann, wenn die Ladung trotz des Einsinkens in die Kunststofffolie leicht auf dem Nutzfahrzeugboden verrutscht oder durch einen Stapler oder dergleichen auf dem Nutzfahrzeugboden verschoben wird.

Besonders vorteilhaft hat es sich zudem erwiesen, wenn die Kunststofffolie bei einem Taber-Test nach DIN 53754 nach 1000 Runden einen Kennwert zwischen -4,0 mg und 5,5 mg, insbesondere zwischen -4,5 mg und -5,0 mg, weiter vorzugsweise von etwa -4,7 mg, erzielt. So wird eine hohe Haltbarkeit erreicht und zugleich ein hoher Reibbeiwert µ ermöglicht.

Nicht nur hinsichtlich der Haltbarkeit der Kunststofffolie, sondern insbesondere auch wegen deren Verarbeitbarkeit bei der Herstellung des Nutzfahrzeugbodens kann die Kunststofffolie eine Shore-Härte D nach DIN 53505 und/oder DIN EN ISO 868 von 45 bis 55, insbesondere 48 bis 52, weiter Vorzugsweise etwa 50, aufweisen. Die Kunststofffolie kann alternativ oder zusätzlich aus den gleichen Gründen eine Shore-Härte A nach DIN 53505 und/oder DIN EN ISO 868 zwischen 60 und 95, insbesondere zwischen 75 und 95, aufweisen.

Bei ersten Untersuchungen hat sich gezeigt, dass Kunststofffolien mit einer Dichte nach DIN EN ISO 1183-1-A von zwischen 1,08 g/cm³ und 1,4 g/cm³, insbesondere zwischen 1,2 g/cm³ und 1,3 g/cm³, bevorzugte Eigenschaften hinsichtlich der vielschichtigen Anforderungen insgesamt aufweisen können. Dies gilt in gleicher Weise auch für Kunststofffolien, die alternativ oder zusätzlich eine Zugfestigkeit, etwa nach DIN 53504-S2 und/oder ISO 37, zwischen 40 MPa und 60 MPa, vorzugsweise zwischen 40 und 50 MPa, insbesondere zwischen 42,5 MPa und 47,5 MPa, weiter vorzugsweise von etwa 45 MPa, aufweisen.

Um der nicht vermeidbaren Abnutzung der Kunststofffolie Rechnung zu tragen, kann die Kunststofffolie mehrschichtig oder mehrlagig aufgebaut sein. Dabei können sich die einzelnen Schichten oder Lagen hinsichtlich ihrer Eigenschaften unterscheiden. In einem einfachen Fall können die Schichten eine unterschiedliche Färbung aufweisen. An der Farbe der Kunststofffolie kann so einfach erkannt werden, wenn die Kunststofffolie ersetzt oder repariert werden sollte. Eine neue Kunststofffolie kann aus den genannten Gründen sehr schnell und unkompliziert auf den Bodenbelag insgesamt oder nur auf die abgenutzten Stellen aufgebracht werden.

Alternativ oder zusätzlich können einzelne Schichten der Kunststofffolie bedruckt sein, etwa um dem Fahrer anzuzeigen, dass wenigstens an bestimmten Stellen des Nutzfahrzeugbodens bereits eine oder mehrer Lagen der Kunststofffolie abgetragen ist/sind. Dies wird den Fahrer beispielsweise darauf aufmerksam machen, die Kunststofffolie erneuern zu lassen.

Es kann alternativ oder zusätzlich auch vorgesehen sein, dass eine obere Schicht oder Lage, beispielsweise die oberste Schicht oder Lage, der Kunststofffolie einen höheren Reibbeiwert als eine, insbesondere unmittelbar, darunter liegende Schicht oder Lage der Kunststofffolie aufweist und dass die obere, ggf. oberste, Schicht eine geringere Abriebfestigkeit als eine, bedarfsweise unmittelbar, darunterliegende Schicht aufweist. Wenn die obere oder oberste Schicht einen sehr hohen Reibbeiwert µ aufweist aber bestimmten Transportaufgaben nicht standhält, wird diese Schicht bzw. Lage abgetragen. Allerdings wird nicht die gesamte Kunststofffolie abgetragen, sondern nur die obere Schicht, die oberste Schicht oder die obersten Schichten. Die übrigen, also die darunter liegenden Schichten bleiben erhalten, da diese eine höhere Abriebfestigkeit aufweisen. Diese Schichten weisen einen Reibbeiwert µ auf, der zwar geringer als in der obersten Schicht aber dennoch höher als der Reibbeiwert des Bodenbelags ist. So wird sichergestellt, dass für bestimmte Transportaufgaben noch eine Verbesserung erzielt werden kann, ohne dass die Kunststofffolie vorher an die Transportaufgaben angepasst werden muss.

Ein entsprechender mehrschichtiger Folienaufbau ist auch bei einer schleichenden Abnutzung vorteilhaft. Der Reibbeiwert µ nimmt in diesem Fall nämlich langsam ab und nicht schlagartig, so dass sich der Fahrer besser darauf einstellen und sich frühzeitig um eine neue Kunststofffolie kümmern kann. Dabei kann die Abnutzung vorzugsweise durch unterschiedliche Bedruckungen oder Einfärbungen der Schichten angezeigt werden. Ein mehrschichtiger Aufbau der Kunststofffolie, unter dem auch ein mehrlagiger Aufbau der Kunststofffolie verstanden werden kann, bei dem der Reibbeiwert von der obersten zur untersten Schicht abnimmt und die Abriebfestigkeit gleichzeitig zunimmt, ist insbesondere dann zweckmäßig, wenn bei der Kunststofffolie ein größerer Reibbeiwert µ nur auf Kosten der Abriebfestigkeit und umgekehrt erzielt werden kann.

Besonders zweckmäßig ist es für die Fertigung der mehrlagigen oder mehrschichtigen Kunststofffolie, wenn die einzelnen Schichten der Folie aus den gleichen Kunststoffen aber in unterschiedlicher Zusammensetzung gebildet sind. Dann ist auch eine gezielte Abstimmung der Eigenschaften der Schichten aufeinander in einfacher Weise möglich. Zudem kann so eine unerwünschte Delamination, also eine Trennung einzelner Schichten der Kunststofffolie voneinander, vermieden werden.

Besonders vorteilhaft ist es, wenn der Bodenbelag des Nutzfahrzeugbodens im Wesentlichen aus Holz, faserverstärktem Kunststoff oder Metall besteht. Auf diesen Materialien kommt Ladung leicht ins Rutschen. Zudem lässt sich die Kunststofffolie leicht auf diese Materialien aufbringen. Bei der Verwendung von Holz oder einem Holzwerkstoff bietet es sich an, wenn dieses/dieser mit einer Phenolharzbeschichtung versehen ist. Dann kann der Bodenbelag zunächst problemlos gelagert werden, ohne Feuchtigkeit aufzunehmen, auch wenn die Folie erst später aufgebracht wird.

Die eingangs genannte Aufgabe ist auch durch ein Verfahren zur Herstellung eines Nutzfahrzeugbodens, vorzugsweise nach einem der Ansprüche 1 bis 13, gelöst, bei dem der Bodenbelag wenigstens abschnittsweise mit einer die Oberseite des Nutzfahrzeugbodens bildenden Polyvinylchlorid (PVC) und/oder Polyurethan (PUR) aufweisenden Kunststofffolie versehen wird.

Dabei werden im Wesentlichen die bereits im Zusammenhang mit dem entsprechenden Nutzfahrtzeugboden beschriebenen Vorteile erzielt.

Bei einem ersten besonders bevorzugten Verfahren zur Herstellung eines Nutzfahrzeugsbodens kann die Kunststofffolie durch Erweichen und anschließendes Abkühlen auf den Bodenblag aufgebracht werden. In erweichtem Zustand der Kunststofffolie schmiegt sich diese nicht nur sehr gut an alle Unebenheiten des Bodenbelags an, es kann auch eine gute Haftung (Adhäsion) am Bodenbelag erreicht werden, die im abgekühlten Zustand im Wesentlichen erhalten bleibt.

Alternativ oder zusätzlich kann die Kunststofffolie auch auf dem Bodenbelag verklebt werden. Dies kann beispielsweise mittels eines Klebstoffs und/oder Haftvermittlers erfolgen. Dann ist zwar eine weitere Komponente und weitere Schicht des Nutzfahrzeugbodens vonnöten. Allerdings kann die Herstellung des Nutzfahrzeugbodens auf diese Weise erheblich beschleunigt werden, wodurch die vermeintlichen Nachteile einer zusätzlichen Klebstoff- und/oder Haftvermittlerschicht mehr als ausgeglichen werden können.

Die Erfindung wird nachfolgend anhand einer lediglich Ausführungsbeispiele darstellenden Zeichnung näher erläutert. In der Zeichnung zeigt
- Fig. 1: ein Nutzfahrzeug mit einem ersten erfindungsgemäßen Nutzfahrzeugboden,
- Fig. 2: den Nutzfahrzeugboden aus Fig. 1 in einer vertikalen Schnittansicht,
- Fig. 3: einen zweiten erfindungsgemäßen Nutzfahrzeugboden in einer vertikalen Schnittansicht.

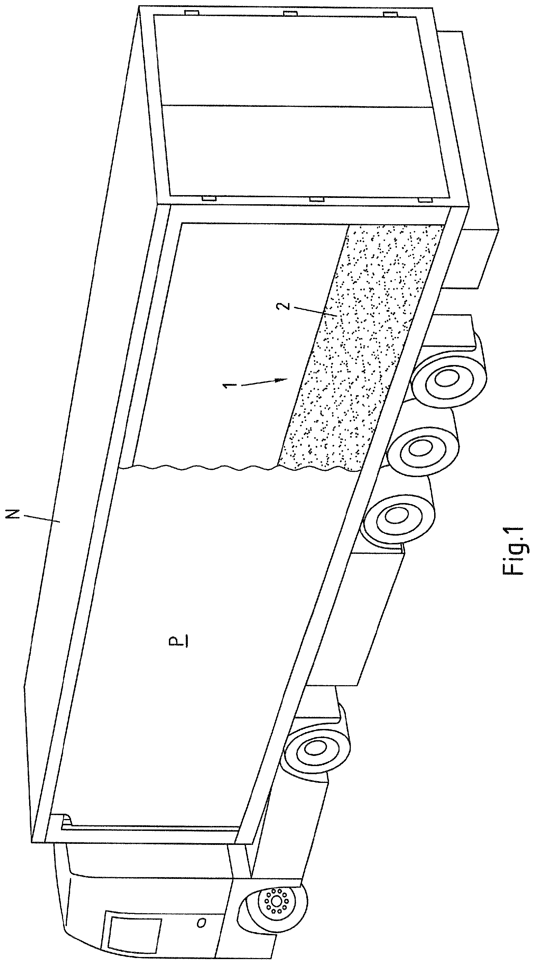

In der Fig. 1 ist ein Nutzfahrzeug N mit einem Planenaufbau P dargestellt. Bei dem dargestellten und insoweit bevorzugten Nutzfahrzeug N handelt es sich um einen Sattelauflieger. Der Nutzfahrzeugboden 1 des Nutzfahrzeugs N ist vollflächig mit einer Kunststofffolie 2 beschichtet.

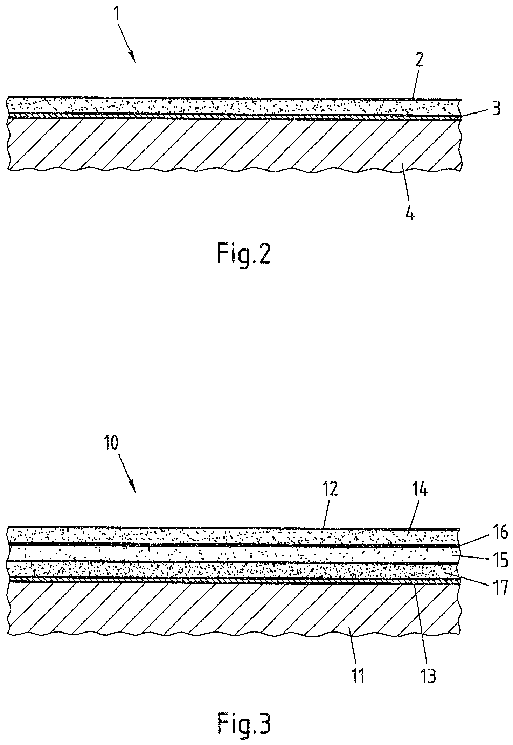

Wie insbesondere in der Fig. 2 dargestellt ist, ist die Kunststofffolie 2 einschichtig aufgebaut und weist eine Dicke von etwa 1500 µm auf. Zudem besteht die Kunststofffolie 2 im Wesentlichen aus einem thermoplastischen Polyurethan, wobei der Reibbeiwert µ der Kunststofffolie wenigstens 0,8 beträgt. Die Kunststofffolie 2 ist bei der Fertigung des Nutzfahrzeugs N als vorkonfektioniertes Material von einer Rolle (Rollenware) abgeschnitten und mittels einer bereits auf der Kunststofffolie 2 vorhandenen Klebstoffschicht 3 auf den Bodenbelag 4 des Nutzfahrzeugbodens 1 aufgeklebt worden. Der Bodenbelag 4 ist aus einem Holzwerkstoff gefertigt, der wenigstens an seiner Oberseite mit einem Phenolharz beschichtet ist.

In der Fig. 3 ist ein Nutzfahrzeugboden 10 umfassend einen Bodenbelag 11 aus einem an der Oberseite und der Unterseite mit Phenolharz beschichteten Holzwerkstoff und einer mehrschichtigen Kunststofffolie 12 dargestellt. Die Kunststofffolie 12 ist ebenfalls vorkonfektioniert und mit einer Klebstoffschicht 13 versehen, mit deren Hilfe die Kunststofffolie 12 auf den Bodenbelag 11 des Nutzfahrzeugbodens 10 aufgeklebt ist.

Die oberste Schicht 14 der Kunststofffolie 12 weist einen Reibbeiwert µ von etwa 0,8 auf und ist transparent. Die unmittelbar darunter vorgesehene kaschierte Schicht oder Lage 15 der Kunststofffolie weist einen Reibbeiwert µ von 0,6 auf. Diese mittlere Schicht 15 weist an ihrer Oberseite eine Bedruckung 16 auf. Die sichtbare Bedruckung 16 zeigt an, dass der Boden einen sehr hohen Reibbeiwert aufweist und dass höchstens geringfügige zusätzliche Ladungssicherungen erforderlich sind. Die Bedruckung 16 kann dabei beispielsweise ein informativer Text oder ein Firmenlogo sein. Wenn die Bedruckung 16 abgerieben ist, ist dem Fahrer ersichtlich, dass nur noch ein verringerter Reibbeiwert zur Verfügung steht. Damit die Haftung der einzelnen Schichten 14, 15 aneinander und/oder der Reibbeiwert µ nicht beeinträchtigt wird, kann die bedruckte Schicht 16 durch Einbringen geringer Mengen von Pigmenten in die Kunststofffolie 12 gebildet werden und/oder eine vergleichbare Zusammensetzung wie die übrigen Schichten 14,15 aufweisen.

Beim dargestellten und insoweit bevorzugten Nutzfahrzeugboden ist die mittlere Schicht 15 opak. Die unterste Schicht 17 weist einen Reibbeiwert µ von 0,4 auf und ist in einer Signalfarbe, beispielsweise rot oder gelb, eingefärbt. Wenn diese zum Vorschein kommt, zeigt sie dem Fahrer an, dass die oberen Schichten bereits verschlissen sind und ein höherer Aufwand für die Ladungssicherung zu betreiben ist. Nun oder spätestens wenn auch diese Schicht 17 teilweise abgetragen ist, ist der Fahrer angehalten, eine neue Kunststofffolie 12 auf den Bodenbelag 11 des Nutzfahrzeugbodens 10 verlegen zu lassen. Wegen der geringen Schichtdicken, muss dazu die alte Folie 12 bedarfsweise nicht entfernt werden. Es stellt aber auch kein Sicherheitsrisiko dar, wenn - aus welchen Gründen auch immer - keine neue Kunststofffolie aufgebracht wird. Der Fahrer ist nämlich über die verminderte rutschhemmende Wirkung des Nutzfahrzeugbodens informiert und kann dementsprechend durch bekannte Techniken und Mittel zur Ladungssicherung ein versehentliches Verrutschen der Ladung weiter verhindern.

Beim dargestellten und insoweit bevorzugten mehrschichtigen Folienaufbau ist jede einzelne Schicht 14, 15, 17 der Kunststofffolie 12 maximal 500 µm oder maximal 1000 µm dick.

## Patentansprüche

1. Nutzfahrzeugboden (1,10), insbesondere eines Lastkraftwagens, Sattelaufliegers und/oder Anhängers, mit einem Bodenbelag (4,11) und einer wenigstens abschnittsweise auf dem Bodenbelag (4,11) vorgesehenen und die Oberseite des Nutzfahrzeugbodens (1,10) bildenden Kunststoffschicht, wobei die Kunststoffschicht unverlierbar mit dem Bodenbelag (4,11) verbunden ist,
**dadurch gekennzeichnet, dass** die Kunststoffschicht eine Polyvinylchlorid (PVC) und/oder Polyurethan (PUR) enthaltende, mit der der Oberseite des Nutzfahrzeugbodens (1,10) gegenüberliegenden Seite direkt auf den Bodenbelag (4,11) aufgeklebte und/oder auf dem Bodenbelag (4,11) kaschierte keine geschäumte Kunststoffschicht aufweisende Kunststofffolie (2,12) ist.

2. Nutzfahrzeugboden nach Anspruch 1,
**dadurch gekennzeichnet, dass** die Kunststofffolie (2,12) Anteile von Acrylat, Polystyrol, Acrylester-Styrol-Acrylnitril und/oder Gummi aufweist.

3. Nutzfahrzeugboden nach Anspruch 2,
**dadurch gekennzeichnet, dass** die Kunststofffolie (2,12) eine glatte Oberseite aufweist.

4. Nutzfahrzeugboden nach einem der Ansprüche 1 bis 3,
**dadurch gekennzeichnet, dass** die Kunststofffolie (2,12) eine Dicke von weniger als 2500 µm, vorzugsweise zwischen 500 µm und 2500 µm, insbesondere zwischen 1000 µm und 2000 µm aufweist.

5. Nutzfahrzeugboden nach einem der Ansprüche 1 bis 4, **dadurch gekennzeichnet, dass** der Reibbeiwert µ der Kunststofffolie (2,12) wenigstens 0,4, vorzugsweise 0,6, weiter vorzugsweise wenigstens 0,8, insbesondere wenigstens 1,0 beträgt.

6. Nutzfahrzeugboden nach einem der Ansprüche 1 bis 5, **dadurch gekennzeichnet, dass** die Kunststofffolie (2,12) ungeschäumt, extrudiert und/oder coextrudiert ist.

7. Nutzfahrzeugboden nach einem der Ansprüche 1 bis 6, **dadurch gekennzeichnet, dass** die Kunststofffolie (2,12) bei einem Taber-Test nach DIN 53754 nach 1000 Runden einen Kennwert zwischen -4,0 mg und -5,5 mg, insbesondere zwischen -4,5 mg und -5,0 mg, erzielt.

8. Nutzfahrzeugboden nach einem der Ansprüche 1 bis 7, **dadurch gekennzeichnet, dass** die Kunststofffolie (2,12) eine Shore-Härte D nach DIN 53505 und/oder DIN EN ISO 868 zwischen 45 und 55, insbesondere zwischen 48 und 52, aufweist und/oder dass die Kunststofffolie (2,12) eine Shore-Härte A nach DIN 53505 und/oder DIN EN ISO 868 zwischen 60 und 95, insbesondere 75 bis 95, aufweist.

9. Nutzfahrzeugboden nach einem der Ansprüche 1 bis 8, **dadurch gekennzeichnet, dass** die Kunststofffolie (2,12) eine Dichte nach DIN EN ISO 1183-1-A zwischen 1,08 g/cm³ und 1,4 g/cm³, insbesondere zwischen 1,2 g/cm³ und 1,3 g/cm³ aufweist.

10. Nutzfahrzeugboden nach einem der Ansprüche 1 bis 9, **dadurch gekennzeichnet, dass** die Kunststofffolie (2,12) eine Zugfestigkeit nach DIN 53504-S2 und/oder ISO 37 zwischen 40 MPa und 60 MPa, vorzugsweise zwischen 40 MPa und 50 MPa, insbesondere zwischen 42,5 MPa und 47,5 MPa aufweist.

11. Nutzfahrzeugboden nach einem der Ansprüche 1 bis 10, **dadurch gekennzeichnet, dass** die Kunststofffolie (12) mehrschichtig aufgebaut ist und dass die einzelnen Schichten (14,15,17) der Kunststofffolie (12) unterschiedlich eingefärbt sind.

12. Nutzfahrzeugboden nach einem der Ansprüche 1 bis 11, **dadurch gekennzeichnet, dass** die Kunststofffolie (12) mehrschichtig aufgebaut ist, dass eine obere Schicht (14) der Kunststofffolie (12) einen höheren Reibbeiwert µ als eine darunter liegende Schicht (15,17) aufweist und dass die obere Schicht (14) eine geringere Abriebfestigkeit als die eine darunter liegende Schicht (15,17) aufweist.

13. Nutzfahrzeugboden nach einem der Ansprüche 1 bis 12, **dadurch gekennzeichnet, dass** die Kunststofffolie (12) mehrschichtig aufgebaut ist und dass die einzelnen Schichten (14,15,17) der Kunststofffolie (2,12) aus den gleichen Kunststoffen aber in unterschiedlicher Zusammensetzung gebildet sind.

14. Verfahren zur Herstellung eines Nutzfahrzeugbodens (1,10) nach einem der Ansprüche 1 bis 13,
bei dem der Bodenbelag (4,11) wenigstens abschnittsweise mit einer die Oberseite des Nutzfahrzeugbodens (1,20) bildenden Polyvinylchlorid (PVC) und/oder Polyurethan (PUR) aufweisenden Kunststofffolie (2,12) versehen wird.

15. Verfahren nach Anspruch 14 oder 15,
bei dem die Kunststofffolie (2,12) durch Erweichen und anschließendes Abkühlen und/oder mittels eines Klebstoffs (3,13) und/oder Haftvermittlers auf den Bodenbelag (4,11) geklebt wird.

## Claims

1. Commercial vehicle floor (1,10), in particular a truck, semi-trailer and/or trailer, with a floor covering (4,11) and equipped with a plastic layer at least partially on the floor covering (4,11) and forming the surface of the commercial vehicle floor (1,10), wherein the plastic layer is undetachably connected to the floor covering (4,11),
**characterised in that**
the plastic layer is a plastic film (2,12) comprising polyvinyl chloride (PVC) and/or polyurethane (PUR), with the side facing the surface of the commercial vehicle floor (1,10) affixed directly onto the floor covering (4,11) and/or laminated onto the floor covering (4,11), and exhibits no foamed plastic layer.

2. Commercial vehicle floor according to Claim 1,
**characterised in that**
the plastic film (2,12) has proportions of acrylate, polystyrene, acrylic ester-styrene-acrylonitrile and/or rubber.

3. Commercial vehicle floor according to Claim 2,
**characterised in that**
the plastic film (2,12) has a smooth surface.

4. Commercial vehicle floor according to any one of Claims 1 to 3,
**characterised in that**
the plastic film (2,12) has a thickness of less than 2500 µm, preferably between 500 µm and 2500 µm, more specifically between 1000 µm and 2000 µm.

5. Commercial vehicle floor according to any one of Claims 1 to 4,
**characterised in that**
the friction coefficient µ of the plastic film (2,12) is at least 0.4, preferably 0.6, more preferably at least 0.8, more specifically at least 1.0.

6. Commercial vehicle floor according to any one of Claims 1 to 5,
**characterised in that**
the plastic film (2,12) is unfoamed, extruded and/or coextruded.

7. Commercial vehicle floor according to any one of Claims 1 to 6,
**characterised in that**
the plastic film (2,12) achieves a characteristic value between -4.0 mg and -5.5 mg, more specifically between -4.5 mg and -5.0 mg in a Taber test according to DIN 53754 after 1000 rounds.

8. Commercial vehicle floor according to any one of Claims 1 to 7,
**characterised in that**
the plastic film (2,12) has a Shore hardness D according to DIN 53505 and/or DIN EN ISO 868 between 45 and 55, more specifically between 48 and 52, and/or **in that** the plastic film (2, 12) has a Shore hardness A according to DIN 53505 and/or DIN EN ISO 868 between 60 and 95, more specifically 75 to 95.

9. Commercial vehicle floor according to any one of Claims 1 to 8,
**characterised in that**
the plastic film (2,12) has a density according to DIN EN ISO 1183-1-A between 1.08 g/cm³ and 1.4 g/cm³, in particular between 1.2 g/cm³ and 1.3 g/cm³.

10. Commercial vehicle floor according to any one of Claims 1 to 9,
**characterised in that**
the plastic film (2,12) has a tensile strength according to DIN 53504-S2 and/or ISO 37 between 40 MPa and 60 MPa, preferably between 40 MPa and 50 MPa, more specifically between 42.5 MPa and 47.5 MPa.

11. Commercial vehicle floor according to any one of Claims 1 to 10,
**characterised in that**
the plastic film (12) is constructed in multiple layers and that the individual layers (14,15,17) of the plastic film (12) are differently coloured.

12. Commercial vehicle floor according to any one of Claims 1 to 11,
**characterised in that**
the plastic film (12) is constructed in multiple layers, that an upper layer (14) of the plastic film (12) has a higher coefficient of friction µ than an underlying layer (15,17) and that the upper layer (14) has a lower abrasion resistance than the one underlying layer (15, 17).

13. Commercial vehicle floor according to any one of Claims 1 to 12,
**characterised in that**
the plastic film (12) is constructed in multiple layers and that the individual layers (14,15,17) of the plastic film (2,12) are made of the same plastics but in different compositions.

14. Method for producing a commercial vehicle floor (1, 10) according to any one of Claims 1 to 13,
in which the floor covering (4, 11) is provided, at least in sections, with a plastic film (2, 12) forming the surface of the commercial vehicle floor (1, 20) and comprising polyvinyl chloride (PVC) and/or polyurethane (PUR).

15. Method according to Claim 14 or 15,
in which the plastic film (2, 12) is adhered to the floor covering (4, 11) by softening and subsequent cooling and/or by means of an adhesive (3, 13) and/or adhesion promoter.

## Revendications

1. Plancher de véhicule utilitaire (1, 10), en particulier d'un poids lourd, d'une semi-remorque et/ou d'une remorque, avec un revêtement de sol (4, 11) et un film en matière synthétique formant la partie supérieure du plancher de véhicule utilitaire (1, 10), prévu au moins partiellement sur le revêtement de sol (4, 11), où le film en matière synthétique est relié de manière imperdable avec le revêtement de sol (4, 11),
**caractérisé en ce que**
le film en matière synthétique est un film en matière synthétique (2, 12) ne présentant aucune couche en matière synthétique expansée et contenant du chlorure de polyvinyle (PVC) et/ou du polyuréthane (PUR), collé directement sur le revêtement de sol (4, 11) et/ou laminé sur le revêtement de sol avec la partie opposée à la partie supérieure du plancher de véhicule utilitaire (1, 10) .

2. Plancher de véhicule utilitaire selon la revendication 1,
**caractérisé en ce que**
le film en matière synthétique (2, 12) présente des parts d'acrylate, polystyrène, acrylonitrile-styrène-acrylate et/ou caoutchouc.

3. Plancher de véhicule utilitaire selon la revendication 2,
**caractérisé en ce que**
le film en matière synthétique (2, 12) présente une face supérieure lisse.

4. Plancher de véhicule utilitaire selon l'une des revendications 1 à 3,
**caractérisé en ce que**
le film en matière synthétique (2, 12) présente une épaisseur inférieure à 2500 µm, de préférence entre 500 µm et 2500 µm, en particulier entre 1000 µm et 2000 µm.

5. Plancher de véhicule utilitaire selon l'une des revendications 1 à 4,
**caractérisé en ce que**
le coefficient de frottement µ du film en matière synthétique (2, 12) est au moins de 0,4, de préférence 0,6, mieux encore au moins de 0,8, en particulier au moins de 1,0.

6. Plancher de véhicule utilitaire selon l'une des revendications 1 à 5,
**caractérisé en ce que**
le film en matière synthétique (2, 12) est non-expansé, extrudé, et/ou co-extrudé.

7. Plancher de véhicule utilitaire selon l'une des revendications 1 à 6,
**caractérisé en ce que**
le film en matière synthétique (2, 12), lors d'un essai de Taber selon DIN 53754, après 1 000 tours, produit une valeur caractéristique entre -4,0 mg et -5,5 mg, en particulier entre -4,5 mg et -5,0 mg.

8. Plancher de véhicule utilitaire selon l'une des revendications 1 à 7,
**caractérisé en ce que**
le film en matière synthétique (2, 12) présente une dureté Shore D selon DIN 53505 et/ou DIN EN ISO 868 entre 45 et 55, en particulier entre 48 et 52, et/ou **en ce que** le film en matière synthétique (2, 12) présente une dureté Shore A selon DIN 53505 et/ou DIN EN ISO 868 entre 60 et 95, en particulier 75 à 95.

9. Plancher de véhicule utilitaire selon l'une des revendications 1 à 8,
**caractérisé en ce que**
le film en matière synthétique (2, 12) présente une densité selon DIN EN ISO 1183-1-A entre 1,08 g/cm³ et 1,4 g/cm³, en particulier entre 1,2 g/cm³ et 1,3 g/cm³.

10. Plancher de véhicule utilitaire selon l'une des revendications 1 à 9,
**caractérisé en ce que**
le film en matière synthétique (2, 12) présente une résistance à la traction selon DIN 53504-S2 et/ou ISO 37 entre 40 MPa et 60 MPa, de préférence entre 40 MPa et 50 MPa, en particulier entre 42,5 MPa et 47,5 MPa.

11. Plancher de véhicule utilitaire selon l'une des revendications 1 à 10,
**caractérisé en ce que**
le film en matière synthétique (12) est construit multicouche et **en ce que** les différentes couches (14, 15, 17) du film en matière synthétique (12) sont colorées différemment.

12. Plancher de véhicule utilitaire selon l'une des revendications 1 à 11,
**caractérisé en ce que**
le film en matière synthétique (12) est construit multicouche, **en ce qu'**une couche supérieure (14) du film en matière synthétique (12) présente un coefficient de frottement µ supérieur qu'une couche sous-jacente (15, 17) et **en ce que** la couche supérieure (14) présente une résistance à l'abrasion plus faible que celle couche sous-jacente (15, 17).

13. Plancher de véhicule utilitaire selon l'une des revendications 1 à 12,
**caractérisé en ce que**
le film en matière synthétique (12) est construit multicouche et **en ce que** les différentes couches (14, 15, 17) du film en matière synthétique (2, 12) sont formées à partir des mêmes matières synthétiques, mais dans des compositions différentes.

14. Procédé de production d'un plancher de véhicule utilitaire (1, 10) selon l'une des revendications 1 à 13,
dans lequel le revêtement de sol (4, 11) est prévu, au moins partiellement, avec un film en matière synthétique (2, 12) présentant du chlorure de polyvinyle (PVC) et/ou du polyuréthane (PUR) formant la face supérieure du plancher de véhicule utilitaire (1, 20).

15. Procédé selon la revendication 14 ou 15,
dans lequel le film en matière synthétique (2, 12) est collé sur le revêtement de sol (4, 11) par ramollissement et refroidissement ultérieur et/ou à l'aide d'un adhésif (3, 13) et/ou d'un agent adhésif.
